# EUROPEAN PATENT APPLICATION

(11) **EP 4 721 978 A1**
(43) Date of publication of application: **08.04.2026**
(21) Application number: 24815409.8
(22) Date of filing: 24.05.2024
(51) Int. Cl.: B32B 29/06, B32B 27/10, B32B 27/30, B65D 65/40, D21H 27/30

(54) **LAMINATE AND PACKAGING BAG**

(30) Priority: 29.05.2023 JP 2023087804
(71) Applicant: Toppan Holdings Inc., Tokyo 110-0016 (JP)
(72) Inventor: KOSHIYAMA, Yoshiki, Tokyo 110-0016 (JP); KAMINAGA, Junichi, Tokyo 110-0016 (JP); ISHII, Rika, Tokyo 110-0016 (JP); KOJIMA, Yumiko, Tokyo 110-0016 (JP)
(74) Representative: Hoffmann Eitle
(86) International application number: PCT/JP2024/019228
(87) International publication number: WO 2024/247926

(57) **Abstract**

A gas barrier laminate according to an aspect of the present disclosure includes at least a paper substrate, a first resin layer, and a gas barrier layer in this order, in which in the paper substrate, the proportion of pulp having a length of 0.4 mm or more and 1 mm or less is 60% or more, and a proportion of pulp having a width of 10 µm or more and 20 µm or less is 40% or more.

## Description

### [Technical Field]

The present disclosure relates to a laminate and a packaging bag.

### [Background Art]

In many fields such as food products, beverages, pharmaceutical products, and chemical products, packaging materials have been used according to the contents of the packaging materials. Packaging materials are required to have permeation resistance (gas barrier properties) with respect to water vapor and the like which cause deterioration of the contents.

In recent years, with the rise of environmental awareness stemming from issues such as the marine plastic debris problem, the momentum to move away from plastics has been increasing. From the perspective of reducing the amount of plastic materials used, the use of paper in place of plastic materials is being considered in various fields. For example, PTL 1 below discloses a laminate in which a barrier layer is laminated on paper.

### [Citation List]

### [Patent Literature]

PTL 1: JP 2022-16714 A

### [Summary of the Invention]

### [Technical Problem]

However, the present inventors have found that, while a laminate in which a barrier layer is laminated on paper has good initial water vapor barrier properties, there is a problem in that the water vapor barrier properties deteriorate when a long period of time has elapsed after production.

Therefore, the present disclosure provides a laminate that uses paper, and is capable of suppressing the deterioration of water vapor barrier properties even after a long period has elapsed after production, and a packaging bag including the laminate.

### [Solution to Problem]

In order to solve the problem described above, a laminate and a packaging bag as described below are provided.
[1] A gas barrier laminate including at least a paper substrate, a first resin layer, and a gas barrier layer in this order, in which in the paper substrate, the proportion of pulp having a length of 0.4 mm or more and 1 mm or less is 60% or more, and a proportion of pulp having a width of 10 µm or more and 20 µm or less is 40% or more.
[2] The gas barrier laminate according to [1], further including a second resin layer on a surface of the gas barrier layer on an opposite side to the first resin layer.
[3] The gas barrier laminate according to [1] or [2], in which a thickness of the first resin layer is 0.3 µm or more and 10 µm or less.
[4] The laminate according to any one of [1] to [3], in which the first resin layer contains at least one resin selected from a group consisting of a polyvinyl alcohol-based resin and a polar group-containing polyolefin resin.
[5] The laminate according to [2], in which the second resin layer contains a polar-group containing polyolefin resin.
[6] The laminate according to any one of [1] to [5], in which the gas barrier layer is an aluminum vapor-deposited layer.
[7] The laminate according to any one of [1] to [6], in which a basis weight of the paper substrate is 20 to 200 g/m².
[8] A packaging bag having the laminate according to any one of [1] to [7].

### [Advantageous Effects of the Invention]

According to the present disclosure, provided is a laminate that uses paper, and is capable of suppressing the deterioration of water vapor barrier properties even after a long period has elapsed after production, and a packaging bag including the laminate.

### [Brief Description of the Drawings]

Fig. 1 is a schematic cross-sectional view showing a laminate according to an embodiment of the present disclosure.
Fig. 2 is a perspective view showing a packaging bag according to an embodiment of the present disclosure.
Fig. 3 is a schematic diagram showing an example of pulp observed by a fiber length distribution analyzer.

### [Description of the Embodiments]

Hereinafter, an embodiment of the present disclosure will be described in detail, with reference to the drawings in some cases. However, the present disclosure is not limited to the following embodiment.

A laminate according to the present embodiment is a gas barrier laminate including at least a paper substrate, a first resin layer, and a gas barrier layer in this order. In the paper substrate, the proportion of pulp having a length of 0.4 mm or more and 1 mm or less is 60% or more, and the proportion of pulp having a width of 10 µm or more and 20 µm or less is 40% or more. The laminate according to the present embodiment may further include a second resin layer on the surface of the gas barrier layer on the opposite side to the first resin layer.

According to the laminate, described above, because the proportion of pulp having a length of 0.4 mm or more and 1 mm or less, and the proportion of pulp having a width of 10 µm or more and 20 µm or less in the paper substrate are within the above numerical ranges, the long-term stability of the water vapor barrier properties of the laminate can be improved, and the deterioration of the water vapor barrier properties can be suppressed even after a long period has elapsed after production of the laminate.

The inventors speculate that the reason such an effect is achieved is as follows. That is, very slight dimensional changes in the paper substrate, which would not be a problem in normal use, create defects such as cracks and pinholes in the gas barrier layer. Such defects affect the long-term stability of the water vapor barrier properties. Here, if a large amount of pulp with a length of less than 0.4 mm is present in the paper substrate, the pulp becomes dense, and the distance between pulp fibers becomes short. As a result, bonds between fibers form more easily, and the expansion and contraction of the pulp propagates throughout the entire paper substrate via the bonds between fibers, making it easier for dimensional changes to occur. Furthermore, if a large amount of pulp with a length exceeding 1 mm is present, the pulp fibers become entangled. This increases the bonding area between fibers, and the expansion and contraction of the pulp propagates throughout the entire paper substrate, making it easier for dimensional changes to occur. Also, if a large amount of pulp with a width of less than 10 µm or exceeding 20 µm is present, the paper tends to absorb moisture and undergo dimensional changes. As a result of the proportion of pulp with a length of 0.4 mm or more and 1 mm or less being 60% or more, the propagation of pulp expansion and contraction throughout the entire paper substrate, and the resulting dimensional changes, can be suppressed. In addition, as a result of the proportion of pulp with a width of 10 µm or more and 20 µm or less being 40% or more, the amount of moisture absorbed by the paper substrate is reduced. As a result, very slight dimensional changes in the paper substrate are reduced, and the water vapor barrier properties of the laminate become stable over a long period.

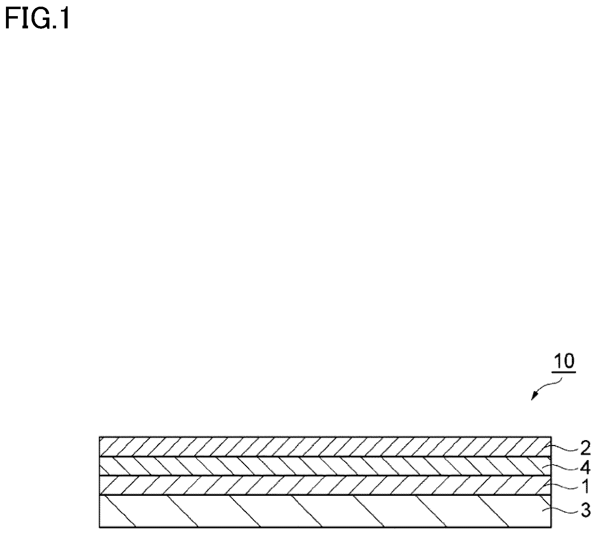

Fig. 1 is a schematic cross-sectional view showing a laminate according to an embodiment. A laminate 10 according to the embodiment includes a paper substrate 3, a first resin layer 1, a gas barrier layer 4, and a second resin layer 2 in this order. Each of the layers will be described below.

### [Paper substrate 3]

The paper substrate may be paper whose main component is plant-derived pulp. Specific examples of the paper substrate include high-quality paper, special high-quality paper, coated paper, art paper, cast-coated paper, imitation paper, kraft paper, and glassine paper.

The basis weight of the paper substrate may be 20 to 500 g/m², 20 to 200 g/m², 30 to 100 g/m², 40 to 90 g/m², or 40 to 80 g/m². If the basis weight of the paper substrate is 500 g/m² or less, the flexibility increases, which makes the paper substrate easier to form into a bag as a flexible packaging material. If the basis weight of the paper substrate is 20 g/m² or more, the paper substrate has even better environmental suitability, and there is a tendency for the bag production speed and lamination speed to improve, which makes it easier to maintain the shape after bag production.

The proportion (number proportion) of pulp with a length of 0.4 mm or more and 1 mm or less may be 65% or more, or 70% or more. The proportion of pulp with a length of 0.4 mm or more and 1 mm or less may be 90% or less, or 80% or less. The proportion (number proportion) of pulp with a length of 0.4 mm or more and 1 mm or less may be 60% or more and 90% or less, 60% or more and 80% or less, 65% or more and 90% or less, 65% or more and 80% or less, 70% or more and 90% or less, or 70% or more and 80% or less. The proportion of pulp with a length of less than 0.4 mm may be 5% or more, 10% or more, or 15% or more, and may be 30% or less. If the proportion of pulp with a length of less than 0.4 mm is 30% or less, the very slight dimensional changes in the paper substrate are further reduced, and the water vapor barrier properties of the laminate tend to be even more stable over a long period. The proportion of pulp with a length exceeding 1 mm may be 5% or more, and may be 20% or less, or 15% or less. If the proportion of pulp with a length exceeding 1 mm is 20% or less, the very slight dimensional changes in the paper substrate are further reduced, and the water vapor barrier properties of the laminate tend to be even more stable over a long period.

The proportion (number proportion) of pulp with a width of 10 µm or more and 20 µm or less may be 50% or more, or 55% or more, and may be less than 80%. The proportion of pulp with a width of 10 µm or more and 20 µm or less may be 40% or more and less than 80%, 50% or more and less than 80%, or 55% or more and less than 80%. The proportion of pulp with a width of less than 10 µm may be 5% or more, and may be 15% or less, or 10% or less. When the proportion of pulp with a width of less than 10 µm is 15% or less, the paper substrate is prevented from becoming hard and brittle, and the bending resistance tends to improve. The proportion of pulp with a width exceeding 20 µm may be 20% or more, or 25% or more, and may be 60% or less, or 50% or less. When the proportion of pulp with a width exceeding 20 µm is 60% or less, the moisture content of the paper substrate does not become excessive, and dimensional changes of the paper substrate due to moisture tend to be further reduced.

The proportion of pulp with a length of 0.4 mm or more and 1 mm or less may be 60% or more, and the proportion of pulp with a width of 10 µm or more and 20 µm or less may be 50% or more; the proportion of pulp with a length of 0.4 mm or more and 1 mm or less may be 60% or more, and the proportion of pulp with a width of 10 µm or more and 20 µm or less may be 55% or more; the proportion of pulp with a length of 0.4 mm or more and 1 mm or less may be 65% or more, and the proportion of pulp with a width of 10 µm or more and 20 µm or less may be 40% or more; the proportion of pulp with a length of 0.4 mm or more and 1 mm or less may be 65% or more, and the proportion of pulp with a width of 10 µm or more and 20 µm or less may be 50% or more; the proportion of pulp with a length of 0.4 mm or more and 1 mm or less may be 65% or more, and the proportion of pulp with a width of 10 µm or more and 20 µm or less may be 55% or more; the proportion of pulp with a length of 0.4 mm or more and 1 mm or less may be 70% or more, and the proportion of pulp with a width of 10 µm or more and 20 µm or less may be 40% or more; the proportion of pulp with a length of 0.4 mm or more and 1 mm or less may be 70% or more, and the proportion of pulp with a width of 10 µm or more and 20 µm or less may be 50% or more; and the proportion of pulp with a length of 0.4 mm or more and 1 mm or less may be 70% or more, and the proportion of pulp with a width of 10 µm or more and 20 µm or less may be 55% or more. The proportion of pulp with a length of 0.4 mm or more and 1 mm or less may be 60% or more and 90% or less, and the proportion of pulp with a width of 10 µm or more and 20 µm or less may be 40% or more and less than 80%; the proportion of pulp with a length of 0.4 mm or more and 1 mm or less may be 60% or more and 80% or less, and the proportion of pulp with a width of 10 µm or more and 20 µm or less may be 40% or more and less than 80%; the proportion of pulp with a length of 0.4 mm or more and 1 mm or less may be 65% or more and 90% or less, and the proportion of pulp with a width of 10 µm or more and 20 µm or less may be 40% or more and less than 80%; the proportion of pulp with a length of 0.4 mm or more and 1 mm or less may be 65% or more and 80% or less, and the proportion of pulp with a width of 10 µm or more and 20 µm or less may be 40% or more and less than 80%; the proportion of pulp with a length of 0.4 mm or more and 1 mm or less may be 70% or more and 90% or less, and the proportion of pulp with a width of 10 µm or more and 20 µm or less may be 40% or more and less than 80%; the proportion of pulp with a length of 0.4 mm or more and 1 mm or less may be 70% or more and 80% or less, and the proportion of pulp with a width of 10 µm or more and 20 µm or less may be 40% or more and less than 80%; the proportion of pulp with a length of 0.4 mm or more and 1 mm or less may be 60% or more and 90% or less, and the proportion of pulp with a width of 10 µm or more and 20 µm or less may be 50% or more and less than 80%; the proportion of pulp with a length of 0.4 mm or more and 1 mm or less may be 60% or more and 80% or less, and the proportion of pulp with a width of 10 µm or more and 20 µm or less may be 50% or more and less than 80%; the proportion of pulp with a length of 0.4 mm or more and 1 mm or less may be 65% or more and 90% or less, and the proportion of pulp with a width of 10 µm or more and 20 µm or less may be 50% or more and less than 80%; the proportion of pulp with a length of 0.4 mm or more and 1 mm or less may be 65% or more and 80% or less, and the proportion of pulp with a width of 10 µm or more and 20 µm or less may be 50% or more and less than 80%; the proportion of pulp with a length of 0.4 mm or more and 1 mm or less may be 70% or more and 90% or less, and the proportion of pulp with a width of 10 µm or more and 20 µm or less may be 50% or more and less than 80%; the proportion of pulp with a length of 0.4 mm or more and 1 mm or less may be 70% or more and 80% or less, and the proportion of pulp with a width of 10 µm or more and 20 µm or less may be 50% or more and less than 80%; the proportion of pulp with a length of 0.4 mm or more and 1 mm or less may be 60% or more and 90% or less, and the proportion of pulp with a width of 10 µm or more and 20 µm or less may be 55% or more and less than 80%; the proportion of pulp with a length of 0.4 mm or more and 1 mm or less may be 60% or more and 80% or less, and the proportion of pulp with a width of 10 µm or more and 20 µm or less may be 55% or more and less than 80%; the proportion of pulp with a length of 0.4 mm or more and 1 mm or less may be 65% or more and 90% or less, and the proportion of pulp with a width of 10 µm or more and 20 µm or less may be 55% or more and less than 80%; the proportion of pulp with a length of 0.4 mm or more and 1 mm or less may be 65% or more and 80% or less, and the proportion of pulp with a width of 10 µm or more and 20 µm or less may be 55% or more and less than 80%; the proportion of pulp with a length of 0.4 mm or more and 1 mm or less may be 70% or more and 90% or less, and the proportion of pulp with a width of 10 µm or more and 20 µm or less may be 55% or more and less than 80%; the proportion of pulp with a length of 0.4 mm or more and 1 mm or less may be 70% or more and 80% or less, and the proportion of pulp with a width of 10 µm or more and 20 µm or less may be 55% or more and less than 80%.

The length and width of the pulp are measured by the method described later in the Examples. The proportion of pulp with a length or width in the above numerical ranges is calculated by the method described later in the Examples.

The paper substrate whose proportion of pulp having a length of 0.4 mm or more and 1 mm or less is 60% or more, and the proportion of pulp having a width of 10 µm or more and 20 µm or less is 40% or more may be obtained, for example, by the following method. That is, a plurality of types of pulp are prepared. The width and length distribution of each pulp is analyzed. A mixture of the various pulps is obtained while adjusting the proportion of each pulp according to the analysis results. The paper substrate is obtained by making paper from the mixture.

The paper substrate may be provided with a coating layer on at least the side that makes contact with the first resin layer. When the paper substrate includes a coating layer, the paper substrate includes at least a paper layer and a coating layer. The coating layer may be provided on both surfaces of the paper substrate. As a result of providing the coating layer, it is possible to prevent the first resin layer from soaking into the paper, and further, the coating layer can also serve the role of filling the irregularities of the paper, allowing the first resin layer to be formed uniformly without defects. The coating layer may contain, for example, as a binder resin, various copolymers such as a styrene-butadiene based, styrene-acrylic based, or ethylene-vinyl acetate based copolymer, a polyvinyl alcohol-based resin, a cellulose-based resin, or paraffin (wax), and may contain, as a filler, clay, kaolin, calcium carbonate, talc, mica, or the like. The coating layer may be a clay coating layer containing at least clay as a filler.

If the paper substrate includes a coating layer, the thickness of the coating layer may be 1.5 µm or more and 15 µm or less. The thickness of the coating layer may be 1.8 µm or more, 3 µm or more, 5 µm or more, or 6 µm or more. The thickness of the coating layer may be 12 µm or less or 10 µm or less. If the thickness of the coating layer is within the above range, the laminate can obtain better water vapor barrier properties.

The thickness of the paper substrate may be 20 to 100 µm, 30 to 80 µm, or 40 to 60 µm. If the thickness of the paper substrate is within the above range, the laminate can obtain better water vapor barrier properties, not only initially but also after a long period has elapsed. A thinner thickness reduces the moisture content of the paper substrate, which makes defects in the gas barrier layer less likely to occur, but if the thickness is too thin, dimensional changes in the paper substrate are likely to occur during coating and drying of the resin layer, which may cause appearance defects such as wrinkles in the laminate. The above range is preferable as the thickness of the paper substrate for achieving both suppression of defects in the gas barrier layer and good appearance of the laminate.

The proportion of the thickness of the paper substrate represented by the thickness of the coating layer may be 3 to 25%, or may be 5 to 20%. If the proportion is within the above range, the laminate can obtain better water vapor barrier properties.

The mass of the paper based on the entire laminate is preferably 50% by mass or more, more preferably 70% by mass or more, and even more preferably 80% by mass or more. If the mass of the paper based on the entire laminate is 50% by mass or more, the amount of plastic material used can be sufficiently reduced, and it can be said that the laminate as a whole is made of paper, and has excellent recyclability.

### [First resin layer 1]

The first resin layer is provided on the surface of the paper substrate, and is provided to improve the adhesion between the paper substrate and the gas barrier layer described later, and to improve the gas barrier properties of the laminate.

The first resin layer may contain at least one type of resin selected from a group consisting of polar group-containing polyolefin resins, polyvinyl alcohol-based resins, acrylic resins, epoxy resins, and polyurethane-based resins. Examples of the polyurethane-based resin include acrylic urethane-based resins, polyester-based polyurethane resins, and polyether-based polyurethane resins. The first resin layer is preferably a polyvinyl alcohol-based resin or a polar group-containing polyolefin resin because such resins have excellent water vapor barrier properties even after bending.

If the first resin layer contains a polar group-containing polyolefin, the first resin layer has excellent flexibility, can suppress cracking of the gas barrier layer described later after bending (after folding), and can also improve the adhesion between the first resin layer and the gas barrier layer. In addition, by including a polar group-containing polyolefin, it is possible to form a dense film due to the crystallinity of the polyolefin, and the water vapor barrier properties are exhibited. The water vapor barrier properties are exhibited due to the crystallinity of the polyolefin, and the adhesion with the gas barrier layer is exhibited due to the presence of polar groups.

The polar group-containing polyolefin may have at least one type of group selected from a carboxyl group, a salt of a carboxyl group, a carboxylic anhydride group, and a carboxylic acid ester.

As the polar group-containing polyolefin, it is possible to use a copolymer of ethylene or propylene with an unsaturated carboxylic acid (an unsaturated compound having a carboxyl group such as acrylic acid, methacrylic acid, or maleic anhydride) or an unsaturated carboxylic acid ester, a salt obtained by neutralizing a carboxylic acid with a basic compound, or a copolymer with vinyl acetate, an epoxy-based compound, a chlorine-based compound, a urethane-based compound, a polyamide-based compound, or the like.

Specific examples of the polar group-containing polyolefin include ethylene-acrylic acid copolymers, ethylene-methacrylic acid copolymers, copolymers of acrylic acid esters and maleic anhydride, ethylene-vinyl acetate copolymers, and ethylene-glycidyl methacrylate copolymers.

If the first resin layer contains a polyvinyl alcohol-based resin, the polyvinyl alcohol-based resin has polar groups (hydroxyl groups), and the polar groups make it easier for bonds to form with the aluminum oxide on the surface of the gas barrier layer, which enables the adhesion between the gas barrier layer and the first resin layer to be more easily improved. In addition, such a first resin layer has excellent flexibility and can suppress cracking of the gas barrier layer after bending (after folding). Furthermore, by including a polyvinyl alcohol-based resin in the first resin layer, the oxygen barrier properties of the laminate can be improved.

The polyvinyl alcohol-based resin is a resin containing vinyl alcohol as a structural unit, and examples of the polyvinyl alcohol-based resin include fully saponified polyvinyl alcohol resins, partially saponified polyvinyl alcohol resins, modified polyvinyl alcohol resins, and ethylene-vinyl alcohol copolymer resins.

The first resin layer may contain other components in addition to the resins described above. Examples of other components include polyolefins other than the polar group-containing polyolefins described above, silane coupling agents, organic titanates, polyesters, polycarbonates, polyureas, polyamides, polyimides, melamine, and phenol.

The thickness of the first resin layer may be, for example, 0.3 µm or more, 0.5 µm or more, 0.8 µm or more, or 1 µm or more, and may be 10 µm or less, or 5 µm or less. If the thickness of the first resin layer is 0.3 µm or more, the irregularities of the paper substrate described above can be efficiently filled, and the gas barrier layer described later can be laminated uniformly. Furthermore, if the thickness of the first resin layer is 10 µm or less, the gas barrier layer can be laminated uniformly while keeping costs low.

Examples of the solvent contained in the coating liquid of the first resin layer include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used singly or in combination of two or more. Among these solvents, from the viewpoint of the properties, methyl alcohol, ethyl alcohol, isopropyl alcohol, toluene, ethyl acetate, methyl ethyl ketone, and water are preferable. From an environmental viewpoint, methyl alcohol, ethyl alcohol, isopropyl alcohol, and water are preferable.

As a method of providing the first resin layer, the first resin layer can be obtained by applying a coating liquid containing the resin, solvent, and the like described above, onto the paper substrate, and then drying the coating liquid.

The drying temperature of the coating liquid is preferably 105 to 160°C, more preferably 110 to 155°C, even more preferably 120 to 150°C, and particularly preferably 130 to 145°C. As a result of the drying temperature being 105°C or higher, the moisture content of the laminate can be reduced. Paper has the property of absorbing or desorbing moisture according to the ambient humidity, and the moisture content changes with the humidity. At this time, if the moisture content is rapidly reduced by high-temperature drying in an oven, when the paper is subsequently left in a humid environment, the moisture content will be lower than before the high-temperature drying. That is, the moisture absorption of the high-temperature dried paper becomes smaller (hysteresis phenomenon of paper). However, if the drying temperature is too high, the paper may shrink due to a rapid change in moisture content, causing appearance defects such as wrinkles. As a result of the drying temperature being 160°C or lower, the occurrence of appearance defects such as wrinkles due to rapid shrinkage of the paper can be suppressed. Also, the drying time of the coating film may be, for example, 0.1 to 2 minutes.

### [Gas barrier layer 4]

As the gas barrier layer, for example, a vapor-deposited layer of a metal or a vapor-deposited layer of an inorganic compound can be used. Examples of the metal include aluminum and silicon. Examples of the inorganic compound include metal oxides. Examples of the metal oxide include aluminum oxide (AlOₓ) and silicon oxide (SiOₓ).

The thickness of the gas barrier layer may be appropriately set depending on the intended use, but is preferably 10 to 300 nm, more preferably 20 to 100 nm, and even more preferably 30 to 100 nm. As a result of the thickness of the gas barrier layer being 10 nm or more, it becomes easier to obtain sufficient continuity of the gas barrier layer, and as a result of the thickness being 300 nm or less, the occurrence of curling and cracks can be sufficiently suppressed, and sufficient gas barrier performance and flexibility can be more easily achieved. Furthermore, as a result of the thickness of the gas barrier layer being 20 nm or more and 100 nm or less, the gas barrier layer becomes less likely to crack, and sufficient water vapor barrier properties can be obtained even after bending.

From the viewpoint of improving the initial gas barrier properties and reducing the influence of corrosion by moisture and ions originating from the adjacent resin layer, the thickness of the gas barrier layer is preferably 105 to 300 nm, more preferably 110 to 250 nm, and even more preferably 110 to 200 nm.

The vapor-deposited layer is preferably formed by a vacuum film-forming means from the viewpoint of water vapor and oxygen gas barrier performance, as well as film uniformity. In terms of the film-forming means, although there are known methods such as the vacuum deposition method, sputtering method, and chemical vapor deposition (CVD) method, the vacuum deposition method is preferable because of the high deposition rate and high productivity. Among vacuum deposition methods, a film-forming means using electron beam heating is particularly effective because the deposition rate is easy to control with the irradiation area, electron beam current, and the like, and the temperature of the deposition material can be raised and lowered in a short time.

### [Second resin layer 2]

The second resin layer is provided on the surface of the gas barrier layer so as to make contact with the gas barrier layer. As a result of providing the laminate with the second resin layer, it is possible to prevent the gas barrier layer from being exposed to moisture and the water vapor barrier properties from deteriorating, and to suppress the deterioration of the water vapor barrier properties of the laminate after a long period has elapsed. The second resin layer may contain a polar group-containing polyolefin.

The polar group-containing polyolefin may have at least one type of group selected from a carboxyl group, a salt of a carboxyl group, a carboxylic anhydride group, and a carboxylic acid ester.

As the polar group-containing polyolefin, it is possible to use a copolymer of ethylene or propylene with an unsaturated carboxylic acid (an unsaturated compound having a carboxyl group such as acrylic acid or methacrylic acid) or an unsaturated carboxylic acid ester, a salt obtained by neutralizing a carboxylic acid with a basic compound, or a copolymer with vinyl acetate, an epoxy-based compound, a chlorine-based compound, a urethane-based compound, a polyamide-based compound, or the like.

Specific examples of the polar group-containing polyolefin include ethylene-acrylic acid copolymers, ethylene-methacrylic acid copolymers, copolymers of acrylic acid esters and maleic anhydride, ethylene-vinyl acetate copolymers, and ethylene-glycidyl methacrylate copolymers.

As a result of including a polar group-containing polyolefin, the second resin layer has excellent flexibility, can suppress cracking of the gas barrier layer after bending (after folding), and has excellent adhesion to the gas barrier layer. In addition, by including the polar group-containing polyolefin described above, it is possible to form a dense film due to the crystallinity of the polyolefin, and the water vapor barrier properties are exhibited. Also, the presence of polar groups exhibits adhesion with the gas barrier layer. Furthermore, as a result of the second resin layer including the polar group-containing polyolefin, because the second resin layer is capable of also serving as a heat seal layer, it is not necessary to provide a separate heat seal layer. In addition, by including the polar group-containing polyolefin described above, the moisture content of the laminate can be reduced, and the deterioration of the water vapor barrier properties of the laminate after a long period has elapsed can be more sufficiently suppressed.

The second resin layer may contain other components in addition to the polar group-containing polyolefin described above. Examples of other components include silane coupling agents, organic titanates, polyacrylates, polyesters, polyurethanes, polycarbonates, polyureas, polyamides, polyolefin-based emulsions, polyimides, melamine, and phenol.

The content of the polar group-containing polyolefin in the second resin layer may be, for example, 50% by mass or more, 70% by mass or more, 90% by mass or more, or 100% by mass.

The thickness of the second resin layer may be, for example, 0.05 µm or more, 0.5 µm or more, 1 µm or more, or 2 µm or more, and may be 20 µm or less, 10 µm or less, or 5 µm or less. If the thickness of the second resin layer is 0.05 µm or more, the second resin layer is capable of sufficiently exhibiting the role as a heat seal layer as described above, and the deterioration of the water vapor barrier properties of the laminate after a long period has elapsed can be more sufficiently suppressed. Furthermore, if the thickness of the second resin layer is 20 µm or less, sufficient adhesion to the gas barrier layer and barrier properties can be exhibited while keeping costs low. Moreover, as a result of the thickness of the second resin layer being 2 µm or more and 10 µm or less, the gas barrier layer becomes less likely to crack, and sufficient water vapor barrier properties can be obtained even after bending.

In the laminate, if the second resin layer contains a polar group-containing polyolefin, the thickness of the second resin layer is 2 µm or more and 10 µm or less, and the thickness of the gas barrier layer is 20 nm or more and 100 nm or less, the effect in which the gas barrier layer becomes less likely to crack and sufficient water vapor barrier properties can be obtained even after bending is particularly prominently achieved.

Examples of the solvent contained in the coating liquid of the second resin layer include water, methyl alcohol, ethyl alcohol, isopropyl alcohol, n-propyl alcohol, n-butyl alcohol, n-pentyl alcohol, dimethyl sulfoxide, dimethylformamide, dimethylacetamide, toluene, hexane, heptane, cyclohexane, acetone, methyl ethyl ketone, diethyl ether, dioxane, tetrahydrofuran, ethyl acetate, and butyl acetate. These solvents may be used singly or in combination of two or more. Among these solvents, from the viewpoint of the properties, methyl alcohol, ethyl alcohol, isopropyl alcohol, toluene, ethyl acetate, methyl ethyl ketone, and water are preferable. From an environmental viewpoint, methyl alcohol, ethyl alcohol, isopropyl alcohol, and water are preferable.

As a method for providing the second resin layer, the second resin layer can be obtained by applying a coating liquid containing the polar group-containing polyolefin, solvent, and the like, onto the gas barrier layer and then drying the coating liquid. The melting point of the polar group-containing polyolefin in the coating liquid is preferably 70 to 160°C, and more preferably 80 to 120°C. A lower melting point of the polar group-containing polyolefin has the advantage that the onset temperature during heat sealing can be lowered. If the melting point of the polar group-containing polyolefin is high, there is an increased risk of blocking in a high-temperature environment. From the viewpoint of preventing blocking, it is better for the particle size to be large so that the contact area is small. Although not particularly limited, the particle size may specifically be 1 nm or more, 0.1 µm or more, and 1 µm or less, 0.7 µm or less, or 0.5 µm or less.

The drying temperature of the coating liquid is preferably 105 to 160°C, more preferably 110 to 155°C, even more preferably 120 to 150°C, and particularly preferably 130 to 145°C. As a result of the drying temperature being 105°C or higher, the moisture content of the laminate can be reduced. Paper has the property of absorbing or desorbing moisture according to the ambient humidity, and the moisture content changes with the humidity. At this time, if the moisture content is rapidly reduced by high-temperature drying in an oven, when the paper is subsequently left in a humid environment, the moisture content will be lower than before the high-temperature drying. That is, the moisture absorption of the high-temperature dried paper becomes smaller (hysteresis phenomenon of paper). However, if the drying temperature is too high, the paper may shrink due to a rapid change in moisture content, causing appearance defects such as wrinkles. As a result of the drying temperature being 160°C or lower, the occurrence of appearance defects such as wrinkles due to rapid shrinkage of the paper can be suppressed. Also, the drying time of the coating film may be, for example, 0.1 to 2 minutes.

The thickness of the laminate including each of the above layers may be 21 to 120 µm, 31 to 100 µm, or 41 to 80 µm. If the thickness of the laminate is within the above range, the laminate can obtain better water vapor barrier properties, not only initially but also after a long period has elapsed.

### <Packaging bag>

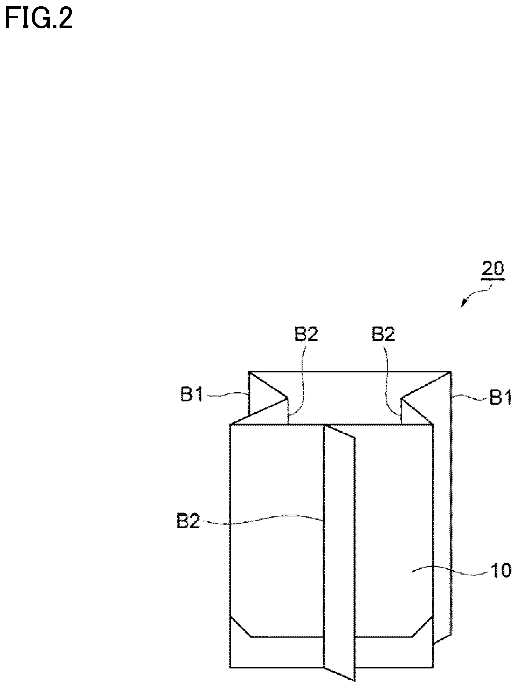

FIG. 2 is a perspective view showing a gusset bag 20 having the laminate 10. A packaging bag is produced by sealing an opening portion at an upper portion of the gusset bag 20. The gusset bag 20 has locations where the laminate 10 is folded (folded portions B1 and B2). The folded portion B1 is a location where the laminate 10 is folded in a valley shape when viewed from the innermost layer side, while the folded portion B2 is a portion where the laminate 10 is folded in a mountain shape when viewed from the innermost layer side.

The packaging bag may be formed into a bag shape by folding a single sheet of the laminate in half so that the second resin layers 2 face each other, and then appropriately folding the laminate into a desired shape and heat sealing the laminate, or may be formed into a bag shape by stacking two sheets of the laminate so that the second resin layers 2 face each other, and then heat sealing the two sheets of the laminate.

In the packaging bag according to the present embodiment, the heat seal strength may be 2 N or more, and may be 4 N or more. Note that the upper limit value of the heat seal strength is not particularly limited, but may be, for example, 10 N or less.

The packaging bag can accommodate contents such as food, pharmaceuticals, and the like. The packaging bag is particularly suitable for accommodating confectionery as food. The packaging bag according to the present embodiment can maintain high gas barrier properties even in a shape having folded portions.

Note that, although a gusset bag has been described as an example of a packaging bag in the present embodiment, for example, a pillow bag, a three-side seal bag, or a standing pouch may be produced using the laminate according to the present embodiment.

The present disclosure will be described in more detail below with reference to the following Examples, but the present disclosure is not limited to the Examples.

### <Preparation of laminate>

### (Example 1)

A paper substrate (total thickness including clay coating layer: 45 µm, proportion of pulp with length of 400 µm or more and 1,000 µm or less: 72.5%, proportion of pulp with width of 10 µm or more and 20 µm or less: 57.2%, basis weight: 55 g/m²) having a clay coating layer (thickness: 5.9 µm) was prepared. On the surface of the clay coating layer side of the paper substrate, an aqueous dispersion of a polyolefin containing a salt of a carboxyl group (product name: ZAIKTHENE AC, manufactured by Sumitomo Seika Chemicals Co., Ltd., particle size: less than 0.2 µm, solvent: water/IPA = 1/1 (mass ratio), solid content concentration: 22.5% by mass) was applied with a gravure coater to form the first resin layer (thickness: 3 µm). Then, as the gas barrier layer, an Al vapor-deposited layer (thickness: 50 nm) was formed by performing Al vapor deposition on the first resin layer by a vacuum deposition method. As a result, the gas barrier laminate was obtained. The gas barrier laminate was prepared in a 23°C, 50% RH environment. The obtained gas barrier laminate was stored by being placed inside a packaging bag having an aluminum vapor-deposited layer together with silica gel. The method of measuring the proportion of pulp with a length of 400 µm or more and 1,000 µm or less and the proportion of pulp with a width of 10 µm or more and 20 µm or less in the paper substrate will be described later.

### (Example 2)

A gas barrier laminate was obtained in the same manner as in Example 1, except that a paper substrate (total thickness including clay coating layer: 50 µm, proportion of pulp with a length of 400 µm or more and 1,000 µm or less: 68.4%, proportion of pulp with a width of 10 µm or more and 20 µm or less: 45.4%, basis weight: 60 g/m²) having a clay coating layer (thickness: 8.1 µm) was used as the paper substrate.

### (Example 3)

A gas barrier laminate was obtained in the same manner as in Example 2, except that the thickness of the Al vapor-deposited layer was changed to 90 nm.

### (Example 4)

A gas barrier laminate was obtained in the same manner as in Example 2, except that the thickness of the Al vapor-deposited layer was changed to 110 nm.

### (Example 5)

A gas barrier laminate was obtained in the same manner as in Example 1, except that a paper substrate (total thickness including clay coating layer: 53 µm, proportion of pulp with a length of 400 µm or more and 1,000 µm or less: 68.5%, proportion of pulp with a width of 10 µm or more and 20 µm or less: 42.8%, basis weight: 60 g/m² product name: Hi-Fi Kraft Lux, manufactured by Sappi Ltd.) having a clay coating layer (thickness: 5.8 µm) was used as the paper substrate.

### (Example 6)

A gas barrier laminate was obtained in the same manner as in Example 1, except that a paper substrate (total thickness including clay coating layer: 59 µm, proportion of pulp with a length of 400 µm or more and 1,000 µm or less: 61.5%, proportion of pulp with a width of 10 µm or more and 20 µm or less: 53.9%, basis weight: 50 g/m²) was used as the paper substrate.

### (Example 7)

A gas barrier laminate was obtained in the same manner as in Example 1, except that a paper substrate (total thickness including clay coating layer: 75 µm, proportion of pulp with a length of 400 µm or more and 1,000 µm or less: 71.0%, proportion of pulp with a width of 10 µm or more and 20 µm or less: 68.7%, basis weight 60 g/m²) was used as the paper substrate.

### (Example 8)

The first resin layer was formed on the surface of the clay coating layer side of the paper substrate in the same manner as in Example 1. The Al vapor-deposited layer was formed on the first resin layer in the same manner as in Example 1. On the surface of the Al vapor-deposited layer on the opposite side to the first resin layer, an aqueous dispersion of polyolefin containing a salt of a carboxyl group (product name: ZAIKTHENE AC, manufactured by Sumitomo Seika Chemicals Co., Ltd., particle size: less than 0.2 µm, solvent: water/IPA = 1/1 (mass ratio), solid content concentration: 22.5% by mass) was applied with a gravure coater to form the second resin layer (thickness: 3 µm), thereby obtaining the gas barrier laminate.

### (Example 9)

A gas barrier laminate was obtained in the same manner as in Example 8, except that a paper substrate (total thickness including clay coating layer: 50 µm, proportion of pulp with a length of 400 µm or more and 1,000 µm or less: 68.4%, proportion of pulp with a width of 10 µm or more and 20 µm or less: 45.4%, basis weight: 60 g/m²) having a clay coating layer (thickness: 8.1 µm) was used as the paper substrate.

### (Example 10)

A gas barrier laminate was obtained in the same manner as in Example 9, except that the thickness of the Al vapor-deposited layer was changed to 90 nm.

### (Example 11)

A gas barrier laminate was obtained in the same manner as in Example 9, except that the thickness of the Al vapor-deposited layer was changed to 110 nm.

### (Example 12)

A gas barrier laminate was obtained in the same manner as in Example 8, except that a paper substrate (total thickness including clay coating layer: 53 µm, proportion of pulp with a length of 400 µm or more and 1,000 µm or less: 68.5%, proportion of pulp with a width of 10 µm or more and 20 µm or less: 42.8%, basis weight: 60 g/m² product name: Hi-Fi Kraft Lux, manufactured by Sappi Ltd.) having a clay coating layer (thickness: 5.8 µm) was used as the paper substrate.

### (Example 13)

A gas barrier laminate was obtained in the same manner as in Example 8, except that a paper substrate (thickness: 59 µm, proportion of pulp with a length of 400 µm or more and 1,000 µm or less: 61.5%, proportion of pulp with a width of 10 µm or more and 20 µm or less: 53.9%, basis weight: 50 g/m²) was used as the paper substrate.

### (Example 14)

A gas barrier laminate was obtained in the same manner as in Example 8, except that a paper substrate (thickness: 75 µm, proportion of pulp with a length of 400 µm or more and 1,000 µm or less: 71.0%, proportion of pulp with a width of 10 µm or more and 20 µm or less: 68.7%, basis weight: 60 g/m²) was used as the paper substrate.

### (Example 15)

A gas barrier laminate was obtained in the same manner as in Example 8, except that the first resin layer (thickness: 3 µm) was formed using a coating liquid containing a polyvinyl alcohol-based resin (degree of polymerization: 500) instead of the aqueous dispersion of a polyolefin containing a salt of a carboxyl group.

### (Example 16)

A gas barrier laminate was obtained using the same operations as in Example 15, except that a paper substrate (total thickness including clay coating layer: 50 µm, proportion of pulp with a length of 400 µm or more and 1,000 µm or less: 68.4%, proportion of pulp with a width of 10 µm or more and 20 µm or less: 45.4%, basis weight: 60 g/m²) having a clay coating layer (thickness: 8.1 µm) was used as the paper substrate.

### (Example 17)

A gas barrier laminate was obtained in the same manner as in Example 16, except that the thickness of the Al vapor-deposited layer was changed to 80 nm.

### (Example 18)

A gas barrier laminate was obtained in the same manner as in Example 16, except that the thickness of the Al vapor-deposited layer was changed to 140 nm.

### (Example 19)

A gas barrier laminate was obtained using the same operations as in Example 15, except that a paper substrate (total thickness including clay coating layer: 53 µm, proportion of pulp with a length of 400 µm or more and 1,000 µm or less: 68.5%, proportion of pulp with a width of 10 µm or more and 20 µm or less: 42.8%, basis weight: 60 g/m² product name: Hi-Fi Kraft Lux, manufactured by Sappi Ltd.) having a clay coating layer (thickness: 5.8 µm) was used as the paper substrate.

### (Example 20)

A paper substrate (total thickness including clay coating layer: 53 µm, proportion of pulp with length of 400 µm or more and 1,000 µm or less: 68.5%, proportion of pulp with width of 10 µm or more and 20 µm or less: 42.8%, basis weight: 60 g/m²) having a clay coating layer (thickness: 5.8 µm) was prepared. On the surface of the clay coating layer side of the paper substrate, an aqueous polyurethane resin containing an acid group-containing polyurethane resin and a polyamine compound was applied with a gravure coater to form the first resin layer (thickness: 3 µm). Then, Al vapor deposition was performed on the first resin layer by a vacuum deposition method to form an Al vapor-deposited layer (thickness: 50 nm). On the surface of the Al vapor-deposited layer on the opposite side to the first resin layer, an aqueous dispersion of polyolefin containing a salt of a carboxyl group (product name: ZAIKTHENE AC, manufactured by Sumitomo Seika Chemicals Co., Ltd., particle size: less than 0.2 µm, solvent: water/IPA = 1/1 (mass ratio), solid content concentration: 22.5% by mass) was applied with a gravure coater to form the second resin layer (thickness: 3 µm), thereby obtaining the gas barrier laminate.

### (Example 21)

A gas barrier laminate was obtained in the same manner as in Example 1, except that a silica vapor-deposited layer (thickness: 50 nm) was formed on the first resin layer by a vacuum deposition method instead of the Al vapor-deposited layer as the gas barrier layer.

### (Comparative Example 1)

A gas barrier laminate was obtained in the same manner as in Example 1, except that a paper substrate (thickness: 67 µm, proportion of pulp with a length of 400 µm or more and 1,000 µm or less: 62.7%, proportion of pulp with a width of 10 µm or more and 20 µm or less: 30.8%, basis weight: 60 g/m²) was used as the paper substrate.

### (Comparative Example 2)

A gas barrier laminate was obtained in the same manner as in Example 1, except that a paper substrate (thickness: 54 µm, proportion of pulp with a length of 400 µm or more and 1,000 µm or less: 67.7%, proportion of pulp with a width of 10 µm or more and 20 µm or less: 39.8%, basis weight: 55 g/m²) was used as the paper substrate.

### (Comparative Example 3)

A gas barrier laminate was obtained in the same manner as in Example 1, except that a paper substrate (thickness: 50 µm, proportion of pulp with a length of 400 µm or more and 1,000 µm or less: 54.3%, proportion of pulp with a width of 10 µm or more and 20 µm or less: 49.4%, basis weight: 60 g/m²) was used as the paper substrate.

### (Comparative Example 4)

A gas barrier laminate was obtained in the same manner as in Example 1, except that a paper substrate (total thickness including clay coating layer: 52 µm, proportion of pulp with a length of 400 µm or more and 1,000 µm or less: 57.5%, proportion of pulp with a width of 10 µm or more and 20 µm or less: 47.4%, basis weight: 60 g/m²) having a clay coating layer (thickness: 5.3 µm) was used as the paper substrate.

### (Comparative Example 5)

A gas barrier laminate was obtained in the same manner as in Example 1, except that a paper substrate (thickness: 27 µm, proportion of pulp with a length of 400 µm or more and 1,000 µm or less: 47.8%, proportion of pulp with a width of 10 µm or more and 20 µm or less: 35.7%, basis weight: 33 g/m²) was used as the paper substrate.

### (Comparative Example 6)

A gas barrier laminate was obtained in the same manner as in Example 1, except that a paper substrate (total thickness including clay coating layer: 52 µm, proportion of pulp with a length of 400 µm or more and 1,000 µm or less: 53.6%, proportion of pulp with a width of 10 µm or more and 20 µm or less: 18.3%, basis weight: 60 g/m²) having a clay coating layer (thickness: 9.9 µm) was used as the paper substrate.

### (Comparative Example 7)

A gas barrier laminate was obtained in the same manner as in Example 1, except that a paper substrate (total thickness including clay coating layer: 51 µm, proportion of pulp with a length of 400 µm or more and 1,000 µm or less: 56.2%, proportion of pulp with a width of 10 µm or more and 20 µm or less: 28.0%, basis weight: 60 g/m²) having a clay coating layer (thickness: 9.3 µm) was used as the paper substrate.

### (Comparative Example 8)

A gas barrier laminate was obtained in the same manner as in Example 1, except that a paper substrate (thickness: 35 µm, proportion of pulp with a length of 400 µm or more and 1,000 µm or less: 54.4%, proportion of pulp with a width of 10 µm or more and 20 µm or less: 26.2%, basis weight: 40 g/m²) was used as the paper substrate.

### (Comparative Example 9)

A gas barrier laminate was obtained in the same manner as in Example 8, except that a paper substrate (thickness: 27 µm, proportion of pulp with a length of 400 µm or more and 1,000 µm or less: 47.8%, proportion of pulp with a width of 10 µm or more and 20 µm or less: 35.7%, basis weight: 33 g/m²) was used as the paper substrate.

### (Comparative Example 10)

A gas barrier laminate was obtained in the same manner as in Example 8, except that a paper substrate (total thickness including clay coating layer: 52 µm, proportion of pulp with a length of 400 µm or more and 1,000 µm or less: 53.6%, proportion of pulp with a width of 10 µm or more and 20 µm or less: 18.3%, basis weight: 60 g/m²) having a clay coating layer (thickness: 9.9 µm) was used as the paper substrate.

### (Comparative Example 11)

A gas barrier laminate was obtained in the same manner as in Example 8, except that a paper substrate (thickness: 35 µm, proportion of pulp with a length of 400 µm or more and 1,000 µm or less: 54.4%, proportion of pulp with a width of 10 µm or more and 20 µm or less: 26.2%, basis weight: 40 g/m²) was used as the paper substrate.

### (Comparative Example 12)

A gas barrier laminate was obtained in the same manner as in Example 15, except that a paper substrate (total thickness including clay coating layer: 52 µm, proportion of pulp with a length of 400 µm or more and 1,000 µm or less: 53.6%, proportion of pulp with a width of 10 µm or more and 20 µm or less: 18.3%, basis weight: 60 g/m²) having a clay coating layer (thickness: 9.9 µm) was used as the paper substrate.

### (Comparative Example 13)

A gas barrier laminate was obtained in the same manner as in Example 15, except that a paper substrate (thickness: 35 µm, proportion of pulp with a length of 400 µm or more and 1,000 µm or less: 54.4%, proportion of pulp with a width of 10 µm or more and 20 µm or less: 26.2%, basis weight: 40 g/m²) was used as the paper substrate.

### (Comparative Example 14)

A gas barrier laminate was obtained in the same manner as in Example 15, except that a paper substrate (thickness: 67 µm, proportion of pulp with a length of 400 µm or more and 1,000 µm or less: 62.7%, proportion of pulp with a width of 10 µm or more and 20 µm or less: 30.8%, basis weight: 60 g/m²) was used as the paper substrate.

### (Comparative Example 15)

A gas barrier laminate was obtained in the same manner as in Example 15, except that a paper substrate (total thickness including clay coating layer: 52 µm, proportion of pulp with a length of 400 µm or more and 1,000 µm or less: 53.6%, proportion of pulp with a width of 10 µm or more and 20 µm or less: 18.3%, basis weight: 60 g/m²) having a clay coating layer (thickness: 9.9 µm) was used as the paper substrate.

### <Measurement of water vapor permeability (initial)>

For the laminates obtained in the Examples and Comparative Examples, the water vapor permeability (unit: g/m²·day) was measured under conditions of 40°C and 90% RH by the MOCON method in accordance with JIS K 7129-2. Laminates that were within a few days of production were used. A PERMATRAN 3/34G (manufactured by MOCON) was used for the measurement. The measurement was performed three times, and the average value was determined. The results are shown in Tables 1 to 8.

### <Measurement of water vapor permeability (after 12 months)>

The laminates obtained in the Examples and Comparative Examples were cut to A4 size, and the cut laminates were immediately left to stand for 12 months in a 23°C, 50% RH environment. After standing for 12 months, the water vapor permeability of the laminate (average of three measurements) was determined in the same manner as the measurement method for the initial water vapor permeability. Furthermore, the difference (amount of increase) between the water vapor permeability after standing for 12 months and the initial water vapor permeability was calculated. The results are shown in Tables 1 to 8.

### <Calculation of proportion of pulp of length 0.4 mm or more and 1 mm or less, and proportion of pulp of width 10 µm or more and 20 µm or less>

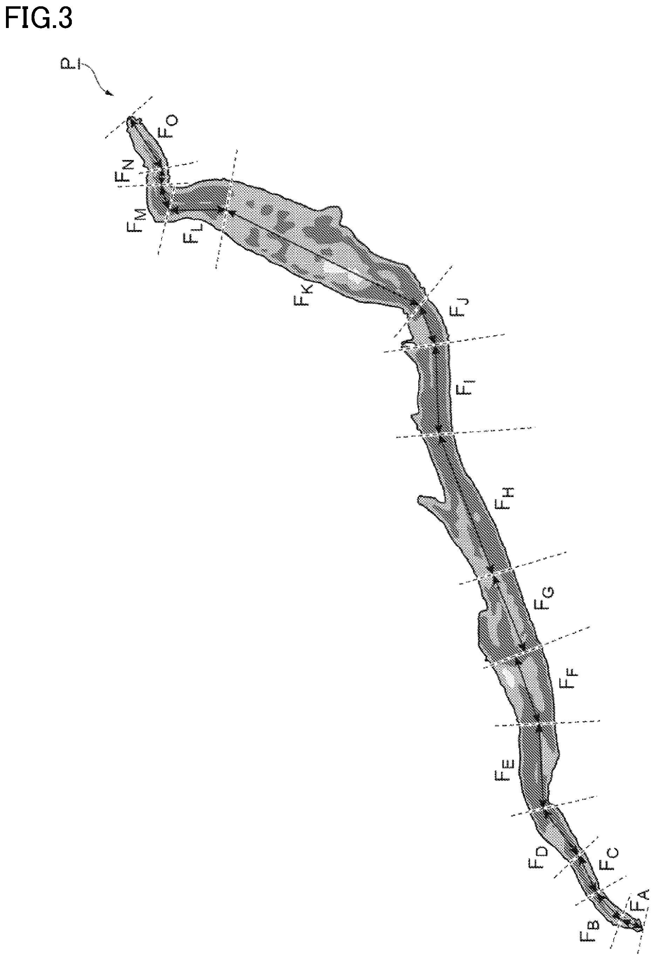

A dispersion liquid in which pulp was dispersed was obtained from the paper substrates of the Examples and Comparative Examples by steps 1 to 4. A total of 5,000 pulp fibers were randomly selected from the pulp in the dispersion liquid, and the pulp length and pulp width of the 5,000 pulp fibers were measured. A fiber length distribution analyzer (product name "MORFI NE", manufactured by FiberTech Co., Ltd.) was used for the measurement. Fig. 3 is a schematic diagram showing an example of pulp observed by the fiber length distribution analyzer. Each pulp fiber was virtually divided into several sections where no bending was observed (F_{A} to F_{O} in Fig. 3). The pulp length is the total value of the lengths of the respective sections. The pulp width is the average value of the width of the pulp at each virtual line.

The proportion of the number of pulp fibers with a length of 0.4 mm or more and 1 mm or less among the 5,000 pulp fibers was calculated from the measurement results. The proportion was calculated for three dispersion liquids, and the average value was determined. In addition, the proportion of the number of pulp fibers with a width of 10 µm or more and 20 µm or less among the 5,000 pulp fibers was calculated. The proportion was calculated for three dispersion liquids, and the average value was determined. The results are shown in Tables 1 to 8.

Step 1: 0.3 g (3 pellets) of sodium hydroxide and 50 g of pure water were placed in a mayonnaise jar to prepare a 0.6% aqueous sodium hydroxide solution.
Step 2: 0.3 g of the paper substrate was added to the aqueous sodium hydroxide solution and stirred for 24 hours.
Step 3: 2 mol/L (2N) hydrochloric acid was added to the mayonnaise jar to neutralize the solution to obtain a mixed liquid.
Step 4: 4 g of the mixed liquid was collected with a dropper, placed in a 1 L plastic container, and 800 g of pure water was added thereto and diluted 200-fold to obtain a dispersion liquid in which the pulp was dispersed.

**[Table 1]**

| | | Example 1 | Example 2 | Example 3 | Example 4 | Example 5 |
|---|---|---|---|---|---|---|
| Proportion (%) of pulp with length 400 µm to 1,000 µm | | 72.5 | 68.4 | 68.4 | 68.4 | 68.5 |
| Proportion (%) of pulp with width 10 µm to 20 µm | | 57.2 | 45.4 | 45.4 | 45.4 | 42.8 |
| First resin layer (thickness) | | Polar group-containing polyolefin (3 µm) | Polar group-containing polyolefin (3 µm) | Polar group-containing polyolefin (3 µm) | Polar group-containing polyolefin (3 µm) | Polar group-containing polyolefin (3 µm) |
| Gas barrier layer (thickness) | | AL (50 nm) | AL (50 nm) | AL (90 nm) | AL (110 nm) | AL (50 nm) |
| Second resin layer (thickness) | | - | - | - | - | - |
| Water vapor permeability | Initial | 7 | 6 | 2.5 | 1.0 | 7 |
| | After 12 months | 10 | 10 | 3.0 | 1.5 | 10 |
| | Increase | 3 | 4 | 0.5 | 0.5 | 3 |

**[Table 2]**

| | | Example 6 | Example 7 | Example 8 | Example 9 | Example 10 |
|---|---|---|---|---|---|---|
| Proportion (%) of pulp with length 400 µm to 1,000 µm | | 61.5 | 71.0 | 72.5 | 68.4 | 68.4 |
| Proportion (%) of pulp with width 10 µm to 20 µm | | 53.9 | 68.7 | 57.2 | 45.4 | 45.4 |
| First resin layer (thickness) | | Polar group-containing polyolefin (3 µm) | Polar group-containing polyolefin (3 µm) | Polar group-containing polyolefin (3 µm) | Polar group-containing polyolefin (3 µm) | Polar group-containing polyolefin (3 µm) |
| Gas barrier layer (thickness) | | AL (50 nm) | AL (50 nm) | AL (50 nm) | AL (50 nm) | AL (90 nm) |
| Second resin layer (thickness) | | - | - | Polar group-containing polyolefin (3 µm) | Polar group-containing polyolefin (3 µm) | Polar group-containing polyolefin (3 µm) |
| Water vapor permeability | Initial | 9 | 9 | 2 | 2 | 0.6 |
| | After 12 months | 11 | 11 | 3 | 3 | 3.0 |
| | Increase | 2 | 2 | 1 | 1 | 2.4 |

**[Table 3]**

| | | Example 11 | Example 12 | Example 13 | Example 14 | Example 15 |
|---|---|---|---|---|---|---|
| Proportion (%) of pulp with length 400 µm to 1,000 µm | | 68.4 | 68.5 | 61.5 | 71.0 | 72.5 |
| Proportion (%) of pulp with width 10 µm to 20 µm | | 45.4 | 42.8 | 53.9 | 68.7 | 57.2 |
| First resin layer (thickness) | | Polar group-containing polyolefin (3 µm) | Polar group-containing polyolefin (3 µm) | Polar group-containing polyolefin (3 µm) | Polar group-containing polyolefin (3 µm) | PVA (3 µm) |
| Gas barrier layer (thickness) | | AL (110 nm) | AL (50 nm) | AL (50 nm) | AL (50 nm) | AL (50 nm) |
| Second resin layer (thickness) | | Polar group-containing polyolefin (3 µm) | Polar group-containing polyolefin (3 µm) | Polar group-containing polyolefin (3 µm) | Polar group-containing polyolefin (3 µm) | Polar group-containing polyolefin (3 µm) |
| Water vapor permeability | Initial | 0.5 | 2 | 2 | 2 | 4 |
| | After 12 months | 1.0 | 3 | 3 | 3 | 7 |
| | Increase | 0.5 | 1 | 1 | 1 | 3 |

**[Table 4]**

| | | Example 16 | Example 17 | Example 18 | Example 19 | Example 20 |
|---|---|---|---|---|---|---|
| Proportion (%) of pulp with length 400 µm to 1,000 µm | | 68.4 | 68.4 | 68.4 | 68.5 | 68.5 |
| Proportion (%) of pulp with width 10 µm to 20 µm | | 45.4 | 45.4 | 45.4 | 42.8 | 42.8 |
| First resin layer (thickness) | | PVA (3 µm) | PVA (3 µm) | PVA (3 µm) | PVA (3 µm) | Polyurethane-based resin (3 µm) |
| Gas barrier layer (thickness) | | AL (50 nm) | AL (80 nm) | AL (140 nm) | AL (50 nm) | AL (50 nm) |
| Second resin layer (thickness) | | Polar group-containing polyolefin (3 µm) | Polar group-containing polyolefin (3 µm) | Polar group-containing polyolefin (3 µm) | Polar group-containing polyolefin (3 µm) | Polar group-containing polyolefin (3 µm) |
| Water vapor permeability | Initial | 3 | 1.3 | 0.4 | 4 | 2 |
| | After 12 months | 6 | 2.0 | 1.0 | 7 | 3 |
| | Increase | 3 | 0.7 | 0.6 | 3 | 1 |

**[Table 5]**

| | | Example 21 |
|---|---|---|
| Proportion (%) of pulp with length 400 µm to 1,000 µm | | 72.5 |
| Proportion (%) of pulp with width 10 µm to 20 µm | | 57.2 |
| First resin layer (thickness) | | Polar group-containing polyolefin (3 µm) |
| Gas barrier layer (thickness) | | Silica (50 nm) |
| Second resin layer (thickness) | | - |
| Water vapor permeability | Initial | 8 |
| | After 12 months | 12 |
| | Increase | 4 |

**[Table 6]**

| | | Comparative Example 1 | Comparative Example 1 | Comparative Example 1 | Comparative Example 1 | Comparative Example 1 |
|---|---|---|---|---|---|---|
| Proportion (%) of pulp with length 400 µm to 1,000 µm | | 62.7 | 67.7 | 54.3 | 57.5 | 47.8 |
| Proportion (%) of pulp with width 10 µm to 20 µm | | 30.8 | 39.8 | 49.4 | 47.4 | 35.7 |
| First resin layer (thickness) | | Polar group-containing polyolefin (3 µm) | Polar group-containing polyolefin (3 µm) | Polar group-containing polyolefin (3 µm) | Polar group-containing polyolefin (3 µm) | Polar group-containing polyolefin (3 µm) |
| Gas barrier layer (thickness) | | AL (50 nm) | AL (50 nm) | AL (50 nm) | AL (50 nm) | AL (50 nm) |
| Second resin layer (thickness) | | - | - | - | - | - |
| Water vapor permeability | Initial | 12 | 11 | 14 | 13 | 17 |
| | After 12 months | 21 | 16 | 27 | 23 | 28 |
| | Increase | 9 | 5 | 13 | 10 | 11 |

**[Table 7]**

| | | Comparative Example 6 | Comparative Example 7 | Comparative Example 8 | Comparative Example 9 | Comparative Example 10 |
|---|---|---|---|---|---|---|
| Proportion (%) of pulp with length 400 µm to 1,000 µm | | 53.6 | 56.2 | 54.4 | 47.8 | 53.6 |
| Proportion (%) of pulp with width 10 µm to 20 µm | | 18.3 | 28.0 | 26.2 | 35.7 | 18.3 |
| First resin layer (thickness) | | Polar group-containing polyolefin (3 µm) | Polar group-containing polyolefin (3 µm) | Polar group-containing polyolefin (3 µm) | Polar group-containing polyolefin (3 µm) | Polar group-containing polyolefin (3 µm) |
| Gas barrier layer (thickness) | | AL (50 nm) | AL (50 nm) | AL (50 nm) | AL (50 nm) | AL (50 nm) |
| Second resin layer (thickness) | | - | - | - | Polar group-containing polyolefin (3 µm) | Polar group-containing polyolefin (3 µm) |
| Water vapor permeability | Initial | 18 | 13 | 20 | 5 | 5 |
| | After 12 months | 30 | 22 | 35 | 14 | 13 |
| | Increase | 12 | 9 | 15 | 9 | 8 |

**[Table 8]**

| | | Comparative Example 11 | Comparative Example 12 | Comparative Example 13 | Comparative Example 14 | Comparative Example 15 |
|---|---|---|---|---|---|---|
| Proportion (%) of pulp with length 400 µm to 1,000 µm | | 54.4 | 53.6 | 54.4 | 62.7 | 53.6 |
| Proportion (%) of pulp with width 10 µm to 20 µm | | 26.2 | 18.3 | 26.2 | 30.8 | 18.3 |
| First resin layer (thickness) | | Polar group-containing polyolefin (3 µm) | PVA (3 µm) | PVA (3 µm) | PVA (3 µm) | Polar group-containing polyolefin (3 µm) |
| Gas barrier layer (thickness) | | AL (50 nm) | AL (50 nm) | AL (50 nm) | AL (50 nm) | Silica (50 nm) |
| Second resin layer (thickness) | | Polar group-containing polyolefin (3 µm) | Polar group-containing polyolefin (3 µm) | Polar group-containing polyolefin (3 µm) | Polar group-containing polyolefin (3 µm) | - |
| Water vapor permeability | Initial | 6 | 7 | 10 | 7 | 13 |
| | After 12 months | 17 | 15 | 21 | 14 | 21 |
| | Increase | 11 | 8 | 11 | 7 | 8 |

### [Reference Signs List]

- 1: First resin layer,
- 2: Second resin layer,
- 3: Paper substrate,
- 4: Gas barrier layer,
- 10: Laminate,
- 20: Gusset bag,
- B1, B2: Folded portion.

## Claims

1. A gas barrier laminate comprising at least a paper substrate, a first resin layer, and a gas barrier layer in this order, wherein
in the paper substrate, the proportion of pulp having a length of 0.4 mm or more and 1 mm or less is 60% or more, and a proportion of pulp having a width of 10 µm or more and 20 µm or less is 40% or more.

2. The gas barrier laminate according to claim 1, further comprising
a second resin layer on a surface of the gas barrier layer on an opposite side to the first resin layer.

3. The gas barrier laminate according to claim 1, wherein
a thickness of the first resin layer is 0.3 µm or more and 10 µm or less.

4. The laminate according to claim 1, wherein
the first resin layer contains at least one resin selected from a group consisting of a polyvinyl alcohol-based resin and a polar group-containing polyolefin resin.

5. The laminate according to claim 2, wherein
the second resin layer contains a polar-group containing polyolefin resin.

6. The laminate according to claim 1, wherein
the gas barrier layer is an aluminum vapor-deposited layer.

7. The laminate according to claim 1, wherein
a basis weight of the paper substrate is 20 to 200 g/m².

8. A packaging bag comprising the laminate according to any one of claims 1 to 7.
